# EUROPEAN PATENT APPLICATION

(11) **EP 2 555 085 A1**
(43) Date of publication of application: **06.02.2013**
(21) Application number: 11759407.7
(22) Date of filing: 23.03.2011
(51) Int. Cl.: G06F 3/023, G06F 3/041, G06F 3/048, H03M 11/04

(54) **MOBILE TERMINAL WITH TOUCH PANEL FUNCTION AND INPUT METHOD FOR SAME**

(30) Priority: 26.03.2010 JP 2010071930
(71) Applicant: NEC Corporation, Tokyo 108-8001 (JP)
(72) Inventor: MANZEN Yoshihisa, Tokyo 108-8001 (JP)
(74) Representative: Vossius & Partner
(86) International application number: PCT/JP2011/056888
(87) International publication number: WO 2011/118602

(57) **Abstract**

A mobile terminal with touch panel function includes: a display section, a touch panel section, and a controller. The touch panel section identifies a location on the screen of the display section that a user has touched. The controller identifies a touched key by collating the location identified by the touch panel section and a location of each key of the keyboard displayed on the screen of the display section, the controller controls a display state of the keys of the keyboard displayed on the screen of the display section in such a manner as to make the display state of keys having a low probability of being touched by the user and the display state of keys having a high probability of being touched by the user differ from each other.

## Description

### {Technical Field}

The present invention relates to a mobile terminal with touch panel function and an input method therefor and, more particularly, to a mobile terminal with touch panel function using a keyboard displayed on a touch panel screen and an input method therefor.

### {Background Art}

In recent years, the number of mobile terminals equipped with a touch panel function has increased drastically. This may be because operation using a touch panel is more intuitive than conventional button operation.

The touch panel is suitable for file migration operation or image zooming operation; however, in terms of character input operation, the touch panel is by no means user-friendly as compared to a conventional keyboard.

Due to demands for the portability, the touch panel has some constraints in terms of the screen size and input tool. For the input tool, input operation is performed using a human finger whose end is thicker than the tip of a stylus pen. With such constraints, the touch panel is designed such that an input is determined not when the finger depresses a target key but when the finger is released from the target key. This reduces the user-friendliness of the touch panel. Under such circumstances, how the characters can be input at high speed using the touch panel with precision has become important.

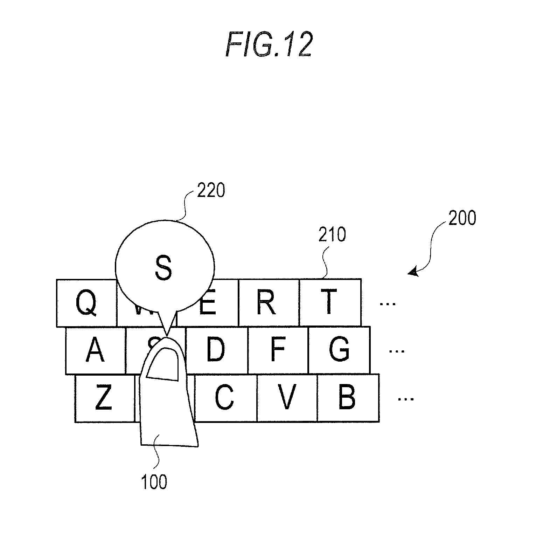

For example, in a mobile terminal with touch panel function of related art illustrated in FIG. 12, a speech bubble 220 indicating which one of keys 210 on a keyboard screen 200 of a touch panel-equipped display unit is touched is popped up so as to make a character hidden by user's finger 100 stand out and to prevent erroneous operation such as touching a different key 210 located near in adjacency of a target key.

These are measures taken so as to make input operation possible using a user's finger whose end is thicker than the tip of a sharp-pointed object such as a stylus pen for a device having a limited sized due to demands for the portability.

In conjunction with the above technique, Patent Literature 1 discloses a touch panel type operation device, such as a touch panel remote controller, that stores the contact frequency of each control key for each time zone and changes a display state of each control key, such as the display size of the key, on the basis of the stored contact frequency of each control key. This increases the area of the touch location of each control key which is touched with high frequency for each time zone to distribute a key touch point, thereby preventing degradation of the panel or concentration of dirt.

### {Citation List}

### {Patent Literature}

{PT1, 1} JP-A-2009-258817

### {Summary of Invention}

### {Technical Problem}

In the method of the above-described related art, an input is not determined at the time when the finger touches the screen so as to allow the user to confirm the speech balloon indicating the touched key, but determined at the time when the finger is released from the screen. According to unlike a conventional keyboard, an input is not determined at the moment of key depression, so that the user feels a delay and fails to achieve high-speed key input comparable to key input for the conventional keyboard.

The technique of PTL 1 is to change the color, location, and size of the key based on information such as use frequency of the key, touching frequency of the key for each time zone, or the like. However, this technique mainly aims to prevent degradation of the panel or concentration of dirt and does not propose specific solutions to improve convenience of character input, such as how the keys are displayed on the screen or how the display of the keys is changed.

An object of the present invention is to solve the above problem and to provide a mobile terminal with touch panel function and an input method for the mobile terminal capable of improving convenience of user's character input operation by facilitating selection of a target key and allowing an input to be determined at the moment of key touch and capable of making possible high-speed key input operation.

### {Solution to Problem}

To attain the above object, according to an aspect of the present invention, there is provided a mobile terminal with touch panel function including: a display section that displays on a screen a keyboard in which a plurality of keys are arranged; a touch panel section that identifies a location on the screen of the display section that a user has touched; and a controller that identifies a touched key by collating the location identified by the touch panel section and a location of each key of the keyboard displayed on the screen of the display section, the controller controls a display state of the keys of the keyboard displayed on the screen of the display section in such a manner as to make the display state of keys having a low probability of being touched by the user and the display state of keys having a high probability of being touched by the user differ from each other.

According to another aspect of the present invention, there is provided an input method for a mobile terminal with touch panel function including: a display section that displays on a screen a keyboard in which a plurality of keys are arranged; a touch panel section that identifies a location on the screen of the display section that a user has touched; and a controller that identifies a touched key by collating the location identified by the touch panel section and a location of each key of the keyboard displayed on the screen of the display section, the controller controls a display state of the keys of the keyboard displayed on the screen of the display section in such a manner as to make the display state of keys having a low probability of being touched by the user and the display state of keys having a high probability of being touched by the user differ from each other.

### {Advantageous Effects of Invention}

According to the present invention, there can be provided a mobile terminal with touch panel function and an input method for the mobile terminal capable of improving convenience of user's character input operation by facilitating selection of a target key and allowing an input to be determined at the moment of key touch and capable of making possible high-speed key input operation.

### {Brief Description of Drawings

FIG. 1: A schematic block diagram illustrating a configuration of a mobile terminal with touch panel function according to a first exemplary embodiment of the present invention.
FIG. 2: A view for explaining operation of the mobile terminal with touch panel function according to the first exemplary embodiment of the present invention.
FIG. 3: A view for explaining operation of the mobile terminal with touch panel function according to a second exemplary embodiment of the present invention.
FIG. 4: A schematic flowchart for explaining operation of the mobile terminal with touch panel function according to the second exemplary embodiment of the present invention.
FIG. 5: A view for explaining operation of the mobile terminal with touch panel function according to a third exemplary embodiment of the present invention.
FIG. 6: A view for explaining operation of the mobile terminal with touch panel function according to a fourth exemplary embodiment of the present invention.
FIG. 7: A view for explaining operation of the mobile terminal with touch panel function according to a fifth exemplary embodiment of the present invention.
FIG. 8: A view for explaining operation of the mobile terminal with touch panel function according to a sixth exemplary embodiment of the present invention.
FIG 9: A view for explaining operation of the mobile terminal with touch panel function according to a seventh exemplary embodiment of the present invention.
FIG. 10: FIGS. 10A and 10B are views each explaining operation of the mobile terminal with touch panel function according to an eighth exemplary embodiment of the present invention.
FIG. 11: FIGS. 11A and 11B are views each explaining operation of the mobile terminal with touch panel function according to a ninth exemplary embodiment of the present invention.
FIG. 12: A view for explaining a character input method for a mobile terminal with touch panel function according to related art.

### {Description of Embodiments}

Exemplary embodiments of a mobile terminal with touch panel function and an input method for the mobile terminal according to the present invention will be described in detail below with reference to the accompanying drawings.

### (First Exemplary Embodiment)

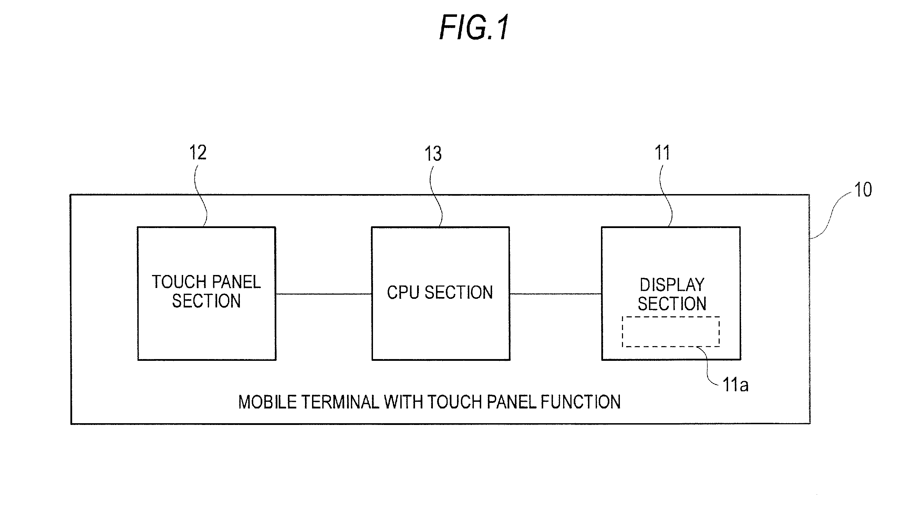

FIG. 1 illustrates a configuration of a mobile terminal with touch panel function according to the present exemplary embodiment.

A mobile terminal 10 with touch panel function illustrated in FIG. 1 is, e.g., a mobile information terminal including a touch panel-equipped display unit, such as a mobile phone or a PDA (Personal Digital Assistant), a smartphone including both the functions of the mobile phone and the PDA, or a tablet terminal (e.g. tablet mobile terminal). The mobile terminal 10 has a not illustrated main body (e.g. casing) having a predetermined shape (e.g. rectangular shape, etc.) with a size small enough to be portable and includes, in the main body, a display section 11 and a touch panel section 12 which constitute a touch panel-equipped display unit, and a CPU (Central Processing Unit) section 13 connected to the display section 11 and touch panel section 12. Although omitted in FIG. 1 for descriptive convenience, the mobile terminal 10 further includes, as constituent elements connected to the CPU section 13, components that a known mobile terminal includes, such as a wireless communication section (not illustrated) including a transmitter/receiver circuit that can communicate with, e.g., a base station by wireless.

The display section 11 includes a keyboard display section 11a that displays a keyboard including a plurality of character input keys arranged on a screen.

The touch panel section 12 identifies a location on the screen of the display section 11 that a user has touched with his or her finger and may be any type of touch panel, such as a known resistance sheet type or an electrostatic capacitive type.

The CPU section 13 includes a CPU that operates according to a control program and a memory that stores the control program and the like. The CPU executes the control program stored in the memory and identifies a touched key by collating an output of the touch panel section 12 and a location of the keyboard displayed on the display section 11. Further, the CPU 13 controls a display state of keys displayed on the screen of the keyboard display section 11a in such a manner as to make the display state of keys having a low probability of being touched by a user and a display state of keys having a high probability of being touched by a user differ from each other. Details of this control operation will be described later.

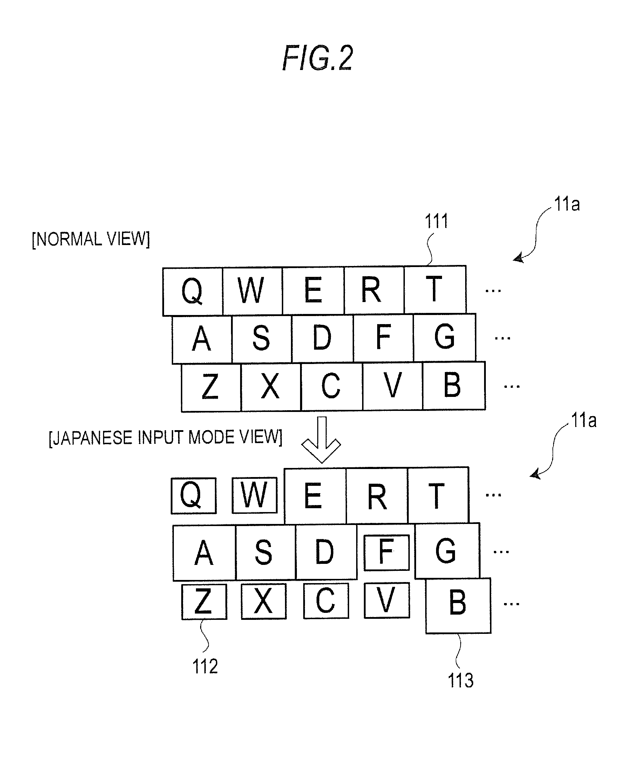

Next, with reference to FIG. 2, operation of the present exemplary embodiment will be described.

As illustrated in FIG. 2, the mobile terminal 10 with touch panel function changes a display state of keys 11 1 (e.g. keys being displayed in the form of a predetermined size) displayed on the keyboard display section 11a when a key display mode is changed from a normal view (upper part of FIG. 2) to a Japanese input mode view ("Romaji" input mode view) (lower part of FIG. 2) in such a manner as to display keys 112 having a low probability of being touched at a size smaller than the predetermined size of the keys 111 in the normal mode and display keys 113 having a high probability of being touched at a size larger than the predetermined size of the keys 111 in the normal mode. Although only a part of the left side of a QWERTY style keyboard is illustrated in FIG. 2, of course all the keys of the keyboard may be necessary. Further, the operation according to the present exemplary embodiment may be applied not only to the QWERTY style keyboard, but also to keyboards having different key arrangement.

For example, assume that "Romaji" input mode view using the QWERTY style keyboard is displayed for Japanese input. In this case, the keys 112 (e.g. Q, W, F, Z, X, C, V) of the keyboard displayed on the keyboard display section 11a of FIG. 2 are considered to be keys having a low probability of being touched by a user since there is no Japanese term starting from Roman letters Q, W, F, Z, X, C, and V. Therefore, the CPU section 13 displays the keys 112 having a low probability of being touched by a user at a size smaller than that of the keys 111 in the normal view.

Conversely, the keys 113 (e.g. E, R, T, A, S, D, G, B) of the keyboard displayed on the keyboard display section 11a of FIG. 2 are considered to be keys having a high probability of being touched by a user since there are Japanese term starting from Roman letters E, R, T, A, S, D, G, and B. Therefore, the CPU section 13 displays the keys 112 having a low probability of being touched by a user at a size smaller than that of the keys 111 in the normal view by utilizing spaces obtained by reducing the size of the keys 112.

This feature facilitates the user to select, from all the keys of the keyboard, a key that the user intends to touch, and allows a character input, which has been determined at the time when the finger is released from the target key, to be determined at the time when the finger touches the target key, thereby improving convenience of user's character input operation and making possible high-speed key input operation.

As described above, according to the mobile terminal with touch panel function according to the present exemplary embodiment, when the user performs character input using the keyboard screen on the touch panel-equipped display unit, the keys having low probability of being touched in the Japanese input mode are displayed at a reduced size, while the keys having high probability of being touched in the same mode are displayed at an increased size.

This feature facilitates the user to select a target key and allows a character input, which is normally determined at the moment of key released, to be determined at the moment of key touch, thereby significantly improving convenience of user's character input operation for the keyboard screen and making possible high-speed key input operation.

In the above exemplary embodiment, the Japanese input (e.g. "Romaji" input) mode has been taken up for description. However, the present invention is not limited this feature, but may be applied to any cases where there exist keys having a high probability of being touched next and having a low probability of being touched next under a given input condition, including "Kana" input mode and character input modes using languages (e.g. English, Chinese, etc.) other than Japanese.

For example, in the case where the use frequency of characters to be input can be predicted, the use frequency of words registered in a dictionary for character input during a predetermined period of time is measured and stored in the CPU section so as to allow the CPU section to classify the keys of the keyboard into keys having a low probability of being touched by the user and keys having a high probability of being touched by using the stored data. Such a configuration is included as an example of the above-mentioned case.

In the above exemplary embodiment, the sizes of the keys having a low probability of being touched by the user and the keys having a high probability of being touched are made to differ from each other. However, the present invention is not limited to this, but any change may be given as long as a target key is made easy to select. For example, color of the key (e.g. character itself or background) or thickness of a frame surrounding the character may be changed.

### (Second Exemplary Embodiment)

Next, a second exemplary embodiment according to the present invention will be described. The mobile terminal with touch panel function according to the present exemplary embodiment assumes also a case where the user touches the key having a low probability of being touched in the configuration according to the first exemplary embodiment.

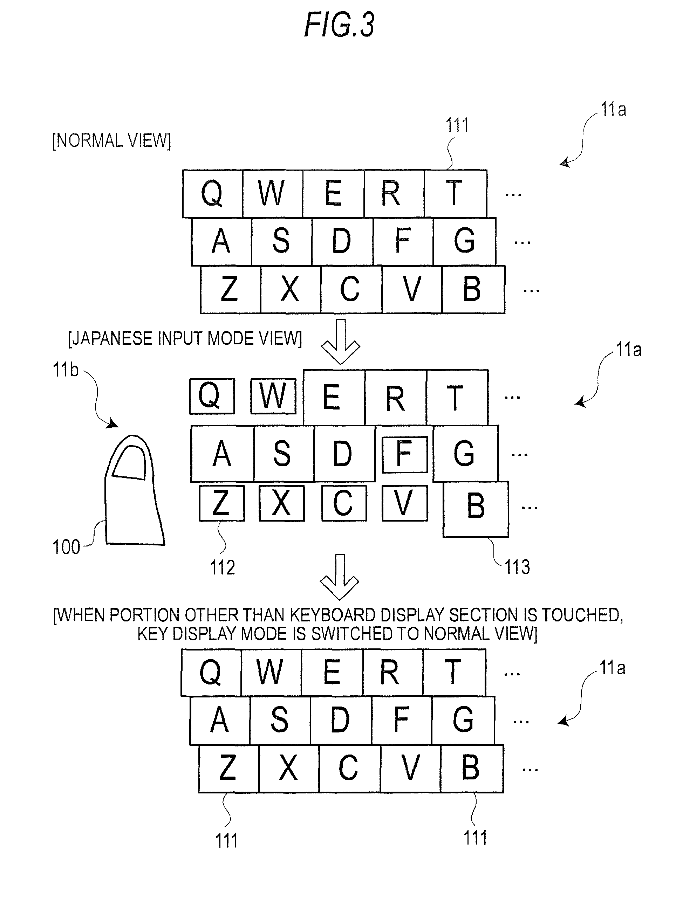

In this case, as illustrated in FIG. 3, when the user touches a portion 11b other than the keyboard display section 11a on the screen of the display section 11 with a finger 100 in the Japanese input mode view where the keys 112 having a low probability of being touched by the user is displayed at a size smaller than that of the keys 111 in the normal view and the keys 113 having a high probability of being touched at a size larger than that of the keys 111 in the normal view, the CPU section 13 immediately performs control so as to switch the key display mode from the Japanese input mode view to the normal view.

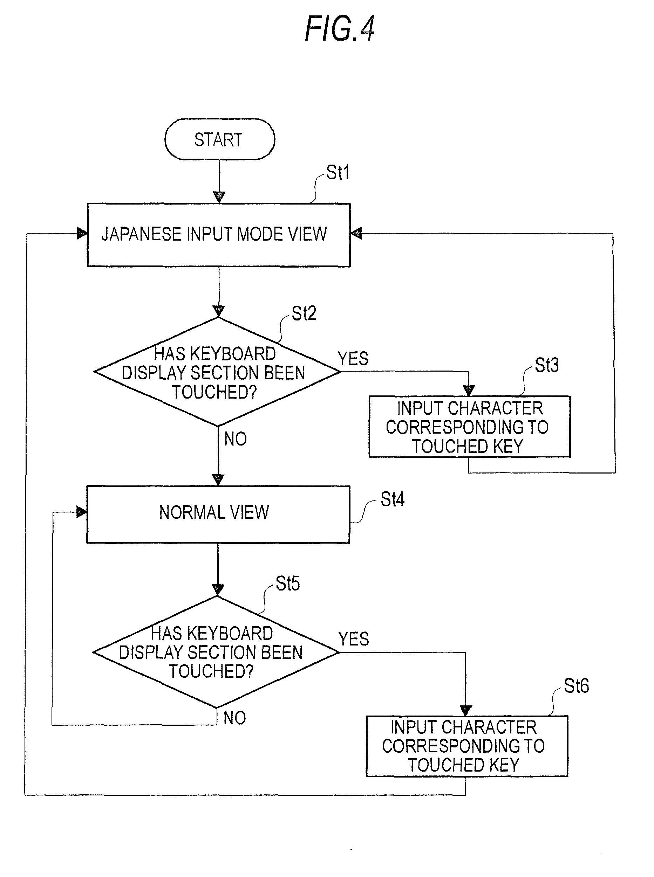

A series of the above control processes is illustrated in a flowchart of FIG. 4. A control program corresponding to the flowchart of FIG. 4 is previously set in, e.g., a memory in the CPU section and executed by the CPU therein.

In FIG. 4, as long as the key is touched (step St2: Yes) in the Japanese input mode view (step St1), the CPU section inputs a character corresponding to the touched key (step St3). As a result, high-speed keyboarding is made possible in the Japanese input mode view.

When the portion 11b other than the keyboard display section 11a on the screen of the display section 11 (step St2: No), the CPU section switches the key display mode from the Japanese input mode view to the normal view and keeps this state (step St5: No) unless the keyboard display section 11a is touched.

Thereafter, when any of the keys on the keyboard display section 11a is selected (step St5: Yes), the CPU section inputs a character corresponding to the touched key (step St6) and switches the key display mode from the normal view to the Japanese input mode view.

As a result, in addition to the effect obtained in the first embodiment, the keys having a low probability of being touched by the user is made easy to touch, thereby further improving convenience of user's character input operation for the keyboard screen.

### (Third Exemplary Embodiment)

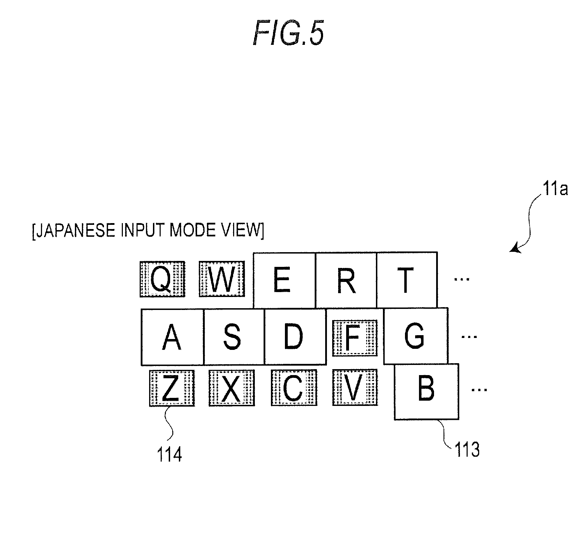

Next, a third exemplary embodiment according to the present invention will be described. As illustrated in FIG. 5, the mobile terminal with touch panel function according to the present exemplary embodiment is designed such that the CPU section not only displays the key 112 having a low probability of being touched by the user at a reduced size but also grays out the keys to disable key input.

As a result, in addition to the effect obtained in the first embodiment, erroneous key operation can effectively be prevented, thereby further improving convenience of user's character input operation for the keyboard screen.

### (Fourth Exemplary Embodiment)

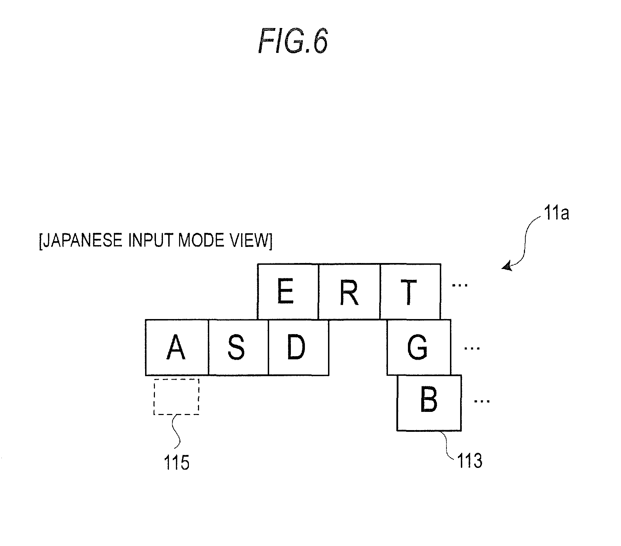

Next, a fourth exemplary embodiment according to the present invention will be described. As illustrated in FIG. 6, the mobile terminal with touch panel function according to the present exemplary embodiment is designed such that the CPU section hides the key 112 having a low probability of being touched by the user (see a dotted frame in FIG. 6).

As a result, in addition to the effect obtained in the first embodiment, erroneous key operation can effectively be prevented, thereby further improving convenience of user's character input operation for the keyboard screen.

### (Fifth Exemplary Embodiment)

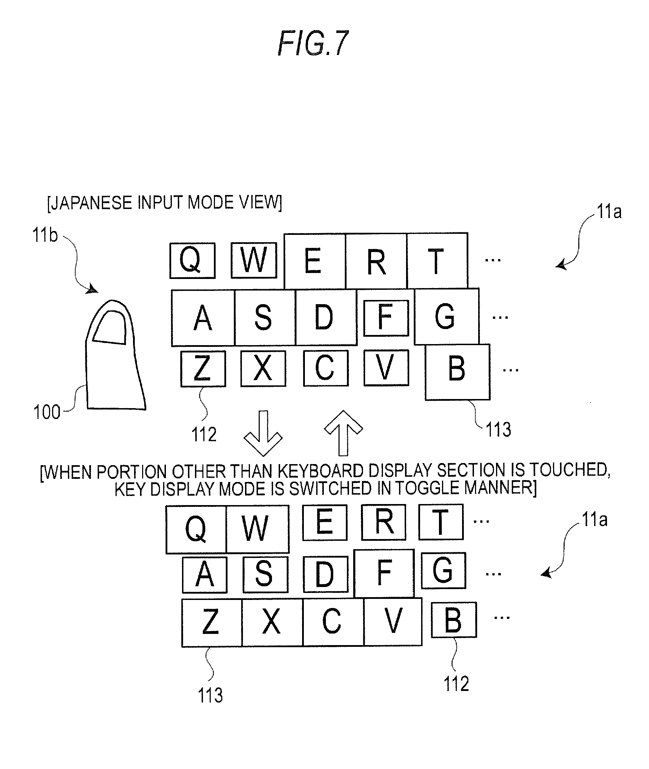

Next, a fifth exemplary embodiment according to the present invention will be described. As illustrated in FIG. 7, the mobile terminal with touch panel function according to the present exemplary embodiment is designed such that when the user touches the portion 11b other than the keyboard display section 11a on the screen of the display section, the CPU section determines that the user intends to touch one of the keys which are displayed at a reduced size as the keys 112 having a low probability of being touched by the user.

In this case, the CPU section displays the keys which are displayed at an increased size as the keys 113 having a high probability of being touched by the user at a reduced size as the keys 112 having a low probability of being touched by the user and displays the keys which are displayed at a reduced size as the keys 112 having a high probability of being touched by the user at an increased size as the keys 112 having a low probability of being touched by the user.

As a result, in addition to the effect obtained in the first embodiment, the user can easily select a target key, thereby further improving convenience of user's character input operation for the keyboard screen.

### (Sixth Exemplary Embodiment)

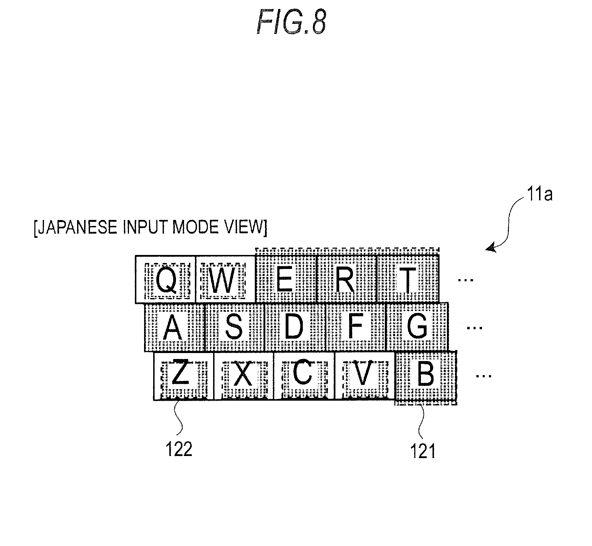

Next, a sixth exemplary embodiment according to the present invention will be described. As illustrated in FIG. 8, the mobile terminal with touch panel function according to the present exemplary embodiment is designed such that the CPU section does not switch a display mode of the keyboard itself on the screen of the keyboard display section 11a from the normal view, but increases or reduces an area for determining which one of keys on the touch panel section has been touched.

In FIG. 8, solid frames each represent a key displayed on the screen, and light-shaded areas 121 and 122 each represent the area that the CPU internally determines that a corresponding key has been touched. Also in this case, the same effect can be obtained as in the above exemplary embodiments although the appearance of the key display is not changed.

### (Seventh Exemplary Embodiment)

Next, a seventh exemplary embodiment according to the present invention will be described. The mobile terminal with touch panel function according to the present exemplary embodiment is obtained by applying the present invention to a mobile terminal with touch panel function in which a character input mode can be switched between a plurality of character input modes, such as a Japanese input mode ("Romaji input mode"), an English input mode, and a Chinese input mode.

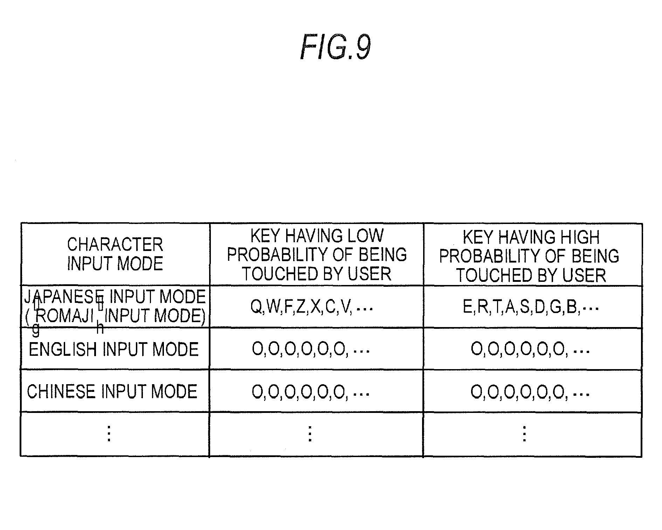

In this case, the keys having a high probability of being touched and keys having a low probability of being touched are previously registered in a correspondence table as illustrated in FIG. 9 for each of the character input modes such as the Japanese input mode (e.g. "Romaji input mode"), the English input mode and Chinese input mode. On basis of the correspondence table, the CPU section identifies the keys having a high probability of being touched and keys having a low probability of being touched for each character input mode and displays the keys having a low probability of being touched by the user at a size smaller than that of the keys in the normal view and displays the keys having a high probability of being touched by the user at a size larger than that of the keys in the normal view.

As a result, convenience of user's character input operation for the keyboard screen is further improved, and a mobile terminal with touch panel function flexibly supporting a plurality of character input modes can be provided.

### (Eighth Exemplary Embodiment)

Next, an eighth exemplary embodiment according to the present invention will be described.

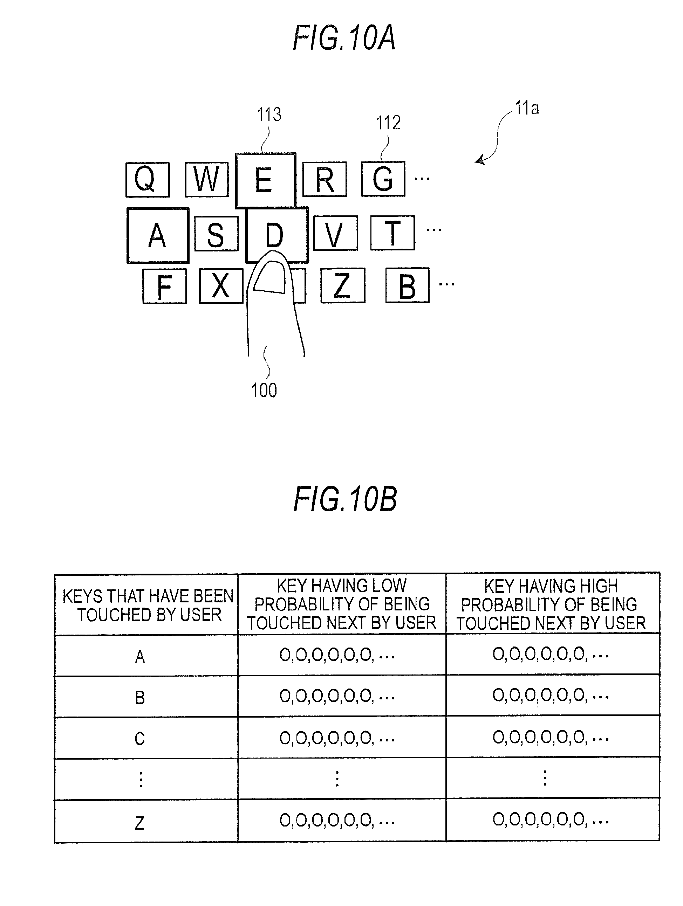

As illustrated in FIG. 10A, the mobile terminal with touch panel function according to the present embodiment is designed so as to predict characters that will be touched next and controls a display state so as to display keys corresponding to the predicted characters at a size larger than that of the keys in the normal view as the keys 113 having a high probability of being touched next and display keys corresponding to the remaining characters at a size smaller than a size of the keys in the normal view as the keys 112 having a low probability of being touched next.

In this example, the keys having a high probability of being touched next by the user and keys having a low probability of being touched next by the user are previously registered in a corresponding table as illustrated in FIG. 10B for each key that has been touched by the user. On basis of the correspondence table, the CPU section identifies, for each key that has been touched by the user, the keys having a high probability of being touched next by the user and keys having a low probability of being touched next by the user and, as described above, displays the keys having a low probability of being touched next by the user at a size smaller than a size of the keys in the normal view and displays the keys having a high probability of being touched next by the user at a size larger than that of the keys in the normal view.

The configuration that predicts the character that will be touched next and displays a key corresponding to the predicted character at an increased size allows further improvement of convenience of user's character input operation for the keyboard screen.

### (Ninth Embodiment)

Next, a ninth exemplary embodiment according to the present invention will be described. The mobile terminal with touch panel function according to the present exemplary embodiment is obtained by applying the present invention to a mobile terminal capable of detecting a portion of the touch panel to which the user's finger is put close. In this example, the CPU section identifies a portion of the touch panel to which the user's finger is put close and displays a key corresponding to the identified portion at a size larger than a size of the key in the normal view as the key having a high probability of being touched next.

In this case, the CPU section may display, at a size larger than in the normal view, not only the key just corresponding to the portion to which the user's finger is put close, but also keys around the portion to which the user's finger is put close.

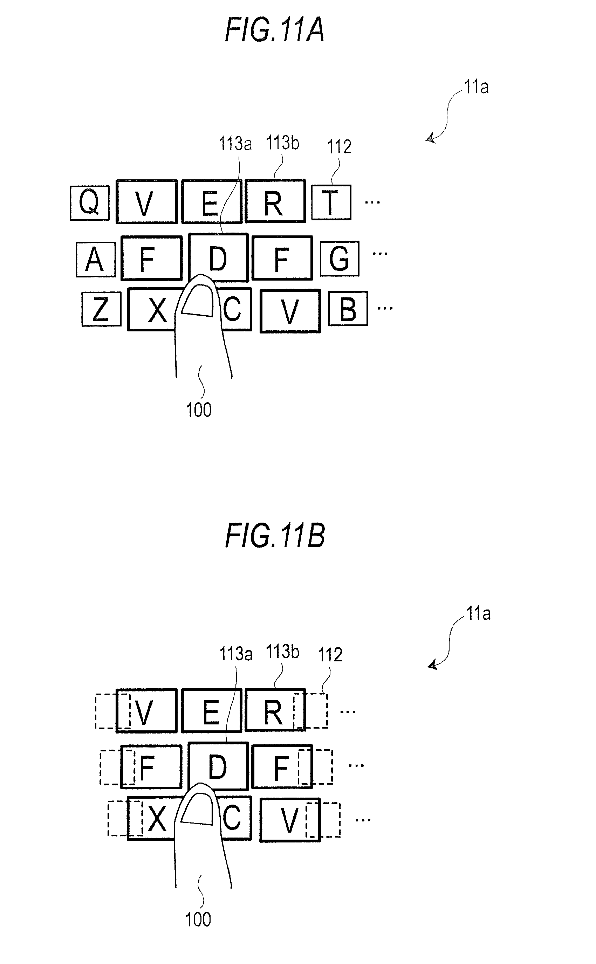

For example, as illustrated in FIG. 11A, the CPU section may display, at a size larger than in the normal view, a key 113a just corresponding to a portion to which the finger 100 is closed and keys 113b around the portion to which the finger 100 is closed and may reduce the size of the keys 112 located comparatively away from the portion to which the finger 100 is put close since the display area of each of the keys 112 is compressed due to enlargement of the key113a and keys 113b.

Further, as illustrated in FIG. 11B, the CPU section may hide the keys 112 located comparatively away from the portion to which the finger 100 is put close so as to display the key 113a just corresponding to the portion to which the finger 100 is put close and keys 113b around the portion to which the finger 100 is put close.

As a result, in the mobile terminal capable of detecting a portion of the touch panel to which the user's finger is put close, convenience of user's character input operation for the keyboard screen is further improved.

The above-described mobile terminal with touch panel function and the input method for the mobile terminal are realized by hardware or software or a combination of hardware and software. The hardware configuration or software configuration in this case is not especially limited but any hardware or software configuration may be applied as long as the above-described functions can be realized.

The whole or part of the exemplary embodiments disclosed above can be described, as, but not limited to, the following supplementary notes.

(Supplementary note 1) A mobile terminal with touch panel function including: a display section that displays on a screen a keyboard in which a plurality of keys are arranged; a touch panel section that identifies a location on the screen of the display section that a user has touched; and a controller that identifies a touched key by collating the location identified by the touch panel section and a location of each key of the keyboard displayed on the screen of the display section, wherein the controller controls a display state of the keys of the keyboard displayed on the screen of the display section in such a manner as to make the display state of keys having a low probability of being touched by the user and the display state of keys having a high probability of being touched by the user differ from each other.

(Supplementary note 2) The mobile terminal with touch panel function according to supplementary note 1, wherein the controller controls the display state of the keys of the keyboard displayed on the screen of the display section in such a manner as to display the keys having a low probability of being touched by the user at a size smaller than a predetermined size and display the keys having a high probability of being touched by the user at a size larger than the predetermined size.

(Supplementary note 3) The mobile terminal with touch panel function according to supplementary note 1, wherein the controller controls the display state of the keys of the keyboard displayed on the screen of the display section in such a manner as to gray out the keys having a low probability of being touched by the user and display the keys having a high probability of being touched by the user at a size larger than the predetermined size.

(Supplementary note 4) The mobile terminal with touch panel function according to supplementary note 1, wherein the controller controls the display state of the keys of the keyboard displayed on the screen of the display section in such a manner as to hide the keys having a low probability of being touched by the user and display the keys having a high probability of being touched by the user at a size larger than the predetermined size.

(Supplementary note 5) The mobile terminal with touch panel function according to supplementary note 2, wherein when the user touches a portion other than the keyboard on the screen of the display section with the intention of touching one of the keys which are displayed at a reduced size, the controller controls the display state of the keys of the keyboard displayed on the screen of the display section in such a manner as to restore to the keys having the predetermined size.

(Supplementary note 6) The mobile terminal with touch panel function according to supplementary note 3, wherein when the user touches a portion other than the keyboard on the screen of the display section with the intention of touching one of the grayed out keys, the controller controls the display state of the keys of the keyboard displayed on the screen of the display section in such a manner as to restore to the keys having the predetermined size.

(Supplementary note 7) The mobile terminal with touch panel function according to supplementary note 4, wherein when the user touches a portion other than the keyboard on the screen of the display section with the intention of touching one of the hidden keys, the controller controls the display state of the keys of the keyboard displayed on the screen of the display section in such a manner as to restore to the keys having the predetermined size.

(Supplementary note 8) The mobile terminal with touch panel function according to supplementary note 2, wherein when the user touches a portion other than the keyboard on the screen of the display section with the intention of touching one of the reduced size keys, the controller controls the display state of the keys of the keyboard displayed on the screen of the display section in such a manner as to display the keys which are displayed at an increased size at a size smaller than the predetermined size and display the keys which are displayed at a reduced size at a size larger than the predetermined size.

(Supplementary note 9) The mobile terminal with touch panel function according to supplementary note 1, wherein the controller displays the keys of the keyboard on the screen of the display section at a predetermined size and collates the location identified by the touch panel section and the location of each key of the keyboard displayed on the screen of the display section to make the size of an area itself for determining which one of keys has been touched differ between the keys having a low probability of being touched by the user and keys having a high probability of being touched by the user.

(Supplementary note 10) An input method for a mobile terminal with touch panel function including steps of: causing a display section to display on a screen a keyboard in which a plurality of keys are arranged; causing a touch panel section to identify a location on the screen of the display section that a user has touched; and causing a controller to identify a touched key by collating the location identified by the touch panel section and a location of each key of the keyboard displayed on the screen of the display section, wherein the controller controls a display state of the keys of the keyboard displayed on the screen of the display section in such a manner as to make the display state of keys having a low probability of being touched by the user and the display state of keys having a high probability of being touched by the user differ from each other.

(Supplementary note 11) The input method according to supplementary note 10, wherein the controller controls the display state of the keys of the keyboard displayed on the screen of the display section in such a manner as to display the keys having a low probability of being touched by the user at a size smaller than a predetermined size and display the keys having a high probability of being touched by the user at a size larger than the predetermined size.

(Supplementary note 12) The input method according to supplementary note 10, wherein the controller controls the display state of the keys of the keyboard displayed on the screen of the display section in such a manner as to gray out the keys having a low probability of being touched by the user and display the keys having a high probability of being touched by the user at a size larger than the predetermined size.

(Supplementary note 13) The input method according to supplementary note 10, wherein, the controller controls the display state of the keys of the keyboard displayed on the screen of the display section in such a manner as to hide the keys having a low probability of being touched by the user and display the keys having a high probability of being touched by the user at a size larger than the predetermined size.

(Supplementary note 14) The input method according to supplementary note 11, wherein when the user touches a portion other than the keyboard on the screen of the display section with the intention of touching one of the keys which are displayed at a reduced size, the controller controls the display state of the keys of the keyboard displayed on the screen of the display section in such a manner as to restore the reduced size keys to the keys having the predetermined size.

(Supplementary note 15) The input method according to supplementary note 12, wherein when the user touches a portion other than the keyboard on the screen of the display section with the intention of touching one of the grayed out keys, the controller controls the display state of the keys of the keyboard displayed on the screen of the display section in such a manner as to restore the grayed out keys to the keys having the predetermined size.

(Supplementary note 16) The input method according to supplementary note 13, wherein when the user touches a portion other than the keyboard on the screen of the display section with the intention of touching one of the hidden keys, the controller controls the display state of the keys of the keyboard displayed on the screen of the display section in such a manner as to restore the hidden keys to the keys having the predetermined size.

(Supplementary note 17) The input method according to supplementary note 11, wherein when the user touches a portion other than the keyboard on the screen of the display section with the intention of touching one of the reduced size keys, the controller controls the display state of the keys of the keyboard displayed on the screen of the display section in such a manner as to display the keys which are displayed at an increased size at a size smaller than the predetermined size and display the keys which are displayed at a reduced size at a size larger than the predetermined size.

(Supplementary note 18) The input method according to supplementary note 10, wherein the controller displays the keys of the keyboard on the screen of the display section at a predetermined size and collates the location identified by the touch panel section and the location of each key of the keyboard displayed on the screen of the display section to make the size of an area itself for determining which one of keys has been touched differ between the keys having a low probability of being touched by the user and keys having a high probability of being touched by the user.

Although the present invention has been described using the exemplary embodiments, the present invention is not limited to the above exemplary embodiments. Further, various modifications that can be appreciated by those skilled in the art may be made to the configuration or details of the present invention within the scope of the present invention.

This application is based upon and claims the benefit of priority from prior Japanese Patent Applications No. 2010-071930. filed March 26, 2010, the entire contents of which are incorporated herein by reference.

### {Industrial Applicability}

As described above, the present invention may be applied to a mobile terminal with touch panel function and an input method therefor.

### {Reference Signs List}

- 10:: Mobile terminal with touch panel function
- 11:: Display section
- 11a:: Keyboard display section
- 12:: Touch panel section
- 13:: CPU section
- 111:: Key in normal view
- 112:: Key having low probability of being touched by user
- 113:: Key having high probability of being touched by user

## Claims

1. A mobile terminal with touch panel function comprising:
a display section that displays on a screen a keyboard in which a plurality of keys are arranged;
a touch panel section that identifies a location on the screen of the display section that a user has touched; and
a controller that identifies a touched key by collating the location identified by the touch panel section and a location of each key of the keyboard displayed on the screen of the display section, wherein
the controller controls a display state of the keys of the keyboard displayed on the screen of the display section in such a manner as to make the display state of keys having a low probability of being touched by the user and the display state of keys having a high probability of being touched by the user differ from each other.

2. The mobile terminal with touch panel function according to claim 1, wherein
the controller controls the display state of the keys of the keyboard displayed on the screen of the display section in such a manner as to display the keys having a low probability of being touched by the user at a size smaller than a predetermined size and display the keys having a high probability of being touched by the user at a size larger than the predetermined size.

3. The mobile terminal with touch panel function according to claim 1, wherein
the controller controls the display state of the keys of the keyboard displayed on the screen of the display section in such a manner as to gray out the keys having a low probability of being touched by the user and display the keys having a high probability of being touched by the user at a size larger than the predetermined size.

4. The mobile terminal with touch panel function according to claim 1, wherein
the controller controls the display state of the keys of the keyboard displayed on the screen of the display section in such a manner as to hide the keys having a low probability of being touched by the user and display the keys having a high probability of being touched by the user at a size larger than the predetermined size.

5. The mobile terminal with touch panel function according to claim 2, wherein
when the user touches a portion other than the keyboard on the screen of the display section with the intention of touching one of the keys which are displayed at a reduced size, the controller controls the display state of the keys of the keyboard displayed on the screen of the display section in such a manner as to restore to the keys having the predetermined size.

6. The mobile terminal with touch panel function according to claim 3, wherein
when the user touches a portion other than the keyboard on the screen of the display section with the intention of touching one of the grayed out keys, the controller controls the display state of the keys of the keyboard displayed on the screen of the display section in such a manner as to restore to the keys having the predetermined size.

7. The mobile terminal with touch panel function according to claim 4, wherein
when the user touches a portion other than the keyboard on the screen of the display section with the intention of touching one of the hidden keys, the controller controls the display state of the keys of the keyboard displayed on the screen of the display section in such a manner as to restore to the keys having the predetermined size.

8. The mobile terminal with touch panel function according to claim 2, wherein
when the user touches a portion other than the keyboard on the screen of the display section with the intention of touching one of the reduced size keys, the controller controls the display state of the keys of the keyboard displayed on the screen of the display section in such a manner as to display the keys which are displayed at an increased size at a size smaller than the predetermined size and display the keys which are displayed at a reduced size at a size larger than the predetermined size.

9. The mobile terminal with touch panel function according to claim 1, wherein
the controller displays the keys of the keyboard on the screen of the display section at a predetermined size and collates the location identified by the touch panel section and the location of each key of the keyboard displayed on the screen of the display section to make the size of an area itself for determining which one of keys has been touched differ between the keys having a low probability of being touched by the user and keys having a high probability of being touched by the user.

10. An input method for a mobile terminal with touch panel function comprising steps of:
causing a display section to display on a screen a keyboard in which a plurality of keys are arranged;
causing a touch panel section to identify a location on the screen of the display section that a user has touched; and
causing a controller to identify a touched key by collating the location identified by the touch panel section and a location of each key of the keyboard displayed on the screen of the display section, wherein
the controller controls a display state of the keys of the keyboard displayed on the screen of the display section in such a manner as to make the display state of keys having a low probability of being touched by the user and the display state of keys having a high probability of being touched by the user differ from each other.
